# EUROPÄISCHE PATENTSCHRIFT

(11) **EP 2 146 882 B1**
(45) Veröffentlichungstag und Bekanntmachung des Hinweises auf die Patenterteilung: **08.01.2014**
(21) Anmeldenummer: 08734923.9
(22) Anmeldetag: 01.04.2008
(51) Int. Cl.: B60T 17/06, B60T 17/18

(54) **FESTSTELLBREMSEINRICHTUNG EINES FAHRZEUGES MIT NOTLÖSEFUNKTION SOWIE VERFAHREN ZUM BETREIBEN EINER DERARTIGEN FESTSTELLBREMSEINRICHTUNG**
PARKING BRAKE DEVICE OF A VEHICLE WITH EMERGENCY RELEASE FUNCTION AND METHOD FOR OPERATING SUCH A PARKING BRAKE DEVICE
DISPOSITIF DE FREINAGE DE STATIONNEMENT D'UN VÉHICULE DISPOSANT D'UNE FONCTION DE RELÂCHEMENT D'URGENCE ET PROCÉDÉS D'UTILISATION D'UN TEL DISPOSITIF DE FREINAGE DE STATIONNEMENT

(30) Priorität: 04.04.2007 DE 102007016335
(43) Veröffentlichungstag der Anmeldung: 27.01.2010
(73) Patentinhaber: WABCO GmbH, 30453 Hannover (DE)
(72) Erfinder: BENSCH, Uwe, 30161 Hannover (DE); FÖRSTER, Henning, 31171 Nordstemmen (DE); KIEL, Bernd-Joachim, 31515 Wunstorf (DE); MENZE, Wilfried, 31832 Springe (DE); ROSENDAHL, Hartmut, 30167 Hannover (DE); STRUWE, Otmar, 30163 Hannover (DE)
(74) Vertreter: Lauerwald, Jörg
(86) Internationale Anmeldenummer: PCT/EP2008/002571
(87) Internationale Veröffentlichungsnummer: WO 2008/122382

(56) Entgegenhaltungen:
- DE-A1- 10 336 611
- DE-A1-102005 024 120
- US-A1- 2008 000 733

## Beschreibung

Die Erfindung betrifft eine Feststellbremseinrichtung eines Fahrzeuges, insbesondere eines Nutzfahrzeuges, mit einer Notlösefunktion zum Notlösen einer Feststellbremse. Ferner betrifft die Erfindung ein Verfahren zum Betreiben einer derartigen Feststellbremseinrichtung.

Bekannte Feststellbremseinrichtungen - auch Parkbremseinrichtungen genannt -, welche vornehmlich bei Nutzfahrzeugen verwendet werden, weisen Federspeicherbremszylinder auf, die zum Lösen einer Feststellbremse belüftet und zum Einlegen der Feststellbremse entlüftet werden. Zu diesem Zweck ist ein (erster) Feststellbremskreis vorgesehen.

Bei einem Leck einer Druckluftleitung zu einem Federspeicherbremszylinder wird der Federspeicherbremszylinder entlüftet und damit die Feststellbremse eingelegt. Aufgrund dieses Lecks kann jedoch der Federspeicherbremszylinder nicht mehr belüftet und daher die Feststellbremse nicht mehr gelöst werden. Das Fahrzeug lässt sich in diesem Zustand, d.h. bei eingelegter Feststellbremse nicht mehr abschleppen. Daher sind unter bekannten Fahrzeugen regelmäßig Löseschrauben an den Federspeicherbremszylindern vorgesehen, mittels denen die Feststellbremse in derartigen Fällen notgelöst werden kann.

Da bei Bussen jedoch üblicherweise zu wenig Platz unter dem Fahrzeug vorhanden ist, um an die Löseschrauben heranzukommen, werden bei Bussen sog. Rohrbruchsicherungen verbaut. Dabei werden die Federspeicherbremszylinder zusätzlich direkt über ein Handbremsventil aus einem zweiten Bremskreis, dem Nebenverbraucherkreis mit Druckluft versorgt, um die Feststellbremse notfalls lösen zu können. Es sind somit zwei Bremskreise für die Feststellbremse vorgesehen, mittels denen die Federspeicherbremszylinder betätigt werden können. Diese beiden Bremskreise der Feststellbremse sind jedoch durch Wechselventile an den Federspeicherbremszylindern getrennt.

Wenn bei gelöster Feststellbremse der erste Feststellbremskreis Luft verliert, bspw. eine Leitung dieses Bremskreises bricht, ist ein meist lautes Abblasgeräusch zu hören. Die Druckluftversorgung der Federspeicherbremszylinder wird dann über den zweiten Feststellbremskreis, den Nebenverbraucherkreis oder Notlösebremskreis, sichergestellt. Auf diese Weise kann man auch in einem Störfall die Feststellbremse wieder lösen oder einlegen. Ein abstufbares Einbremsen ist jedoch dann nicht mehr möglich.

Aus DE 103 36 611 A1 ist eine elektropneumatische Feststellbremse bekannt, bei der über ein Wechselventil zwei Bremskreise parallel an einen Vorratsanschluss eines Feststellbremskreismodulators angeschlossen sind. Am Ausgang des Feststellbremsmodulators befindet sich ein weiteres Wechselventil, durch welches die Federspeicherbremszylinder über zwei parallele Leitungen versorgt werden. An den Federspeichern werden die parallelen Leitungen durch weitere Wechselventile wieder zusammengeführt.

Wenn jedoch bei diesem Feststellbremsmodulator eine Leitung bricht, wird die Leitung sofort durch das Wechselventil geschlossen. Ein Abblasgeräusch ist daher nicht vernehmbar. Die Druckluftversorgung erfolgt sodann über die parallel geschaltete Druckluftleitung. Die Feststellbremse ist auf diese Weise weiterhin abstufbar zu betreiben.

Da jedoch die Feststellbremse auch nach einem Rohrbruch für den Fahrer wie üblich funktioniert und der Fahrer auch kein Abblasgeräusch vernehmen kann, erhält der Fahrer keine Rückmeldung über den Defekt.

Gemäß DE 10 2005 024 120 A1 wird eine Leitung von einem Feststellbremsmodulator zu Federspeicherbremszylindern mit einem Drucksensor überwacht. Bei einem Defekt, bspw. einem Leck in der Leitung, detektiert der Drucksensor, dass trotz einer Signalanforderung zum Lösen der Feststellbremse kein Druckaufbau in der Leitung zum Federspeicherbremszylinder stattfindet. In diesem Fall wird der zweite Feststellbremskreis zum Notlösen aktiviert und eine entsprechende Steuerventileinrichtung so geschaltet, dass eine Strömungsverbindung zwischen dem Druckluftvorratsbehälter des zweiten Feststellbremskreises und den Federspeicherbremszylindern hergestellt wird, so dass die Feststellbremse gelöst werden kann.

Da ein derartiger Rohrbruch jedoch nur sehr selten auftritt, möglicherweise sogar nie während der Lebensdauer des Fahrzeuges, wird auch der zweite Feststellbremskreis, der nur im Notlösefall verwendet wird, nur sehr selten (oder nie) benutzt. Daher wird auch die diesem zweiten Feststellbremskreis zugeordnete Ventileinrichtung nur sehr selten oder nie benutzt. Damit besteht jedoch eine hohe Wahrscheinlichkeit, dass sich diese Steuerventileinrichtung festsetzt (festrottet) und somit nicht mehr gangbar ist. Im seltenen Fehlerfall, wenn ausnahmsweise einmal die Notlösefunktion benötigt wird, besteht somit eine hohe Wahrscheinlichkeit, dass dann auch der Notlösebremskreis, d.h. der zweite Feststellbremskreis ebenfalls ausgefallen ist.

Bei den bekannten Feststellbremseinrichtungen mit Notlösefunktion besteht daher eine recht hohe Wahrscheinlichkeit, dass die Feststellbremse trotz Notlösefunktion nicht mehr gelöst werden kann, wenn ein Rohrbruch im ersten Feststellbremskreis aufgetreten ist. Daher ist bislang die Lösbarkeit der Feststellbremse im Notlösefall nur unzureichend gelöst.

Der Erfindung liegt daher das Problem zugrunde, die Lösbarkeit der Feststellbremse zu verbessern, wenn ein Defekt im ersten Feststellbremskreis aufgetreten ist, insbesondere die Wahrscheinlichkeit zu reduzieren, dass die Feststellbremse im Falle eines Rohrbruchs nicht gelöst werden kann.

Die Erfindung löst dieses Problem mittels einer Feststellbremseinrichtung gemäß Anspruch 1 sowie gemäß Anspruch 4. Ferner löst die Erfindung dieses Problem mit einem Verfahren zum Betreiben einer Feststellbremseinrichtung gemäß Anspruch 11 sowie gemäß Anspruch 13.

Gemäß einem ersten Aspekt der Erfindung ist der Entlüftungsanschluss der Steuerventileinrichtung des zweiten elektropneumatischen Feststellkreises mit einer Druckluftleitung verbunden, die an einem äußeren Bereich des Fahrzeuges endet. Über diese Druckluftleitung kann zur Notlösung der Feststellbremse Druckluft von einer externen Druckluftquelle, d.h. unabhängig von den Druckluftvorratsbehältern der Feststellbremseinrichtung, über den Entlüftungsanschluss dieser Steuerventileinrichtung des zweiten Feststellbremskreises und den zu dem Federspeicherbremszylinder führenden dritten Anschluss dieser Steuerventileinrichtung dem Federspeicherbremszylinder zugeführt werden.

Diese Lösung hat den Vorteil, dass auch bei drucklosen Druckluftvorratsbehältern der Feststellbremseinrichtung bzw. des Fahrzeuges eine Belüftung der Federspeicherbremszylinder und damit ein Lösen der Feststellbremse möglich ist. Bspw. kann somit die Feststellbremse selbst dann noch gelöst werden, wenn am Fahrzeug keine Druckluft mehr zur Verfügung steht. Dieser Fall kann bspw. bei einem Leck in einer Druckluftleitung oder einem Ausfall der elektrischen Energieversorgung auftreten, wenn ein elektrisch betriebener Kompressor keine Druckluft mehr bereitstellen kann.

Gemäß einem zweiten Aspekt der Erfindung werden gelegentliche Testzyklen des zweiten Feststellbremskreises durchgeführt, um die Ventileinrichtung des zweiten Feststellbremskreise gangbar zu halten. Die Feststellbremseinrichtung weist daher eine elektrische oder elektronische Steuereinrichtung zum Steuern der zweiten Steuerventileinrichtung auf, die unabhängig vom Notlösefall die zweite Steuerventileinrichtung testweise betätigt, um den zweiten Feststellbremskreis zu aktivieren. Auf diese Weise kann der zweite Feststellbremskreis, der üblicherweise nur sehr selten oder nie benutzt wird, regelmäßig in Betrieb genommen werden. Auf diese Weise bleiben die entsprechenden Ventile bzw. Ventilkomponenten gangbar und ein Festsetzen bzw. Festrotten der Ventile bzw. Ventilkomponenten wird verhindert.

Beide Aspekte der Erfindung reduzieren signifikant die Wahrscheinlichkeit, dass die Feststellbremse im Falle eines Defekts im ersten Feststellbremskreis auch nicht mehr durch den zweiten Feststellbremskreis gelöst werden kann. Die Gefahr, dass ein Fahrzeug aufgrund eines Defekts der Feststellbremse liegen bleibt, und zwar möglicherweise auch an einer unübersichtlichen oder gefährlichen Stelle, kann somit wesentlich reduziert werden. Die Erfindung erhöht somit die Sicherheit im Straßenverkehr.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:
- Fig. 1: eine Feststellbremseinrichtung eines Kraftfahrzeuges gemäß einem ersten Ausführungsbeispiel der Erfindung;
- Fig. 2: eine Feststellbremseinrichtung eines Kraftfahrzeuges gemäß einem zweiten Ausführungsbeispiel der Erfindung und
- Fig. 3: ein Flussdiagramm zur Veranschaulichung eines Verfahrens gemäß einem weiteren Ausführungsbeispiel der Erfindung.

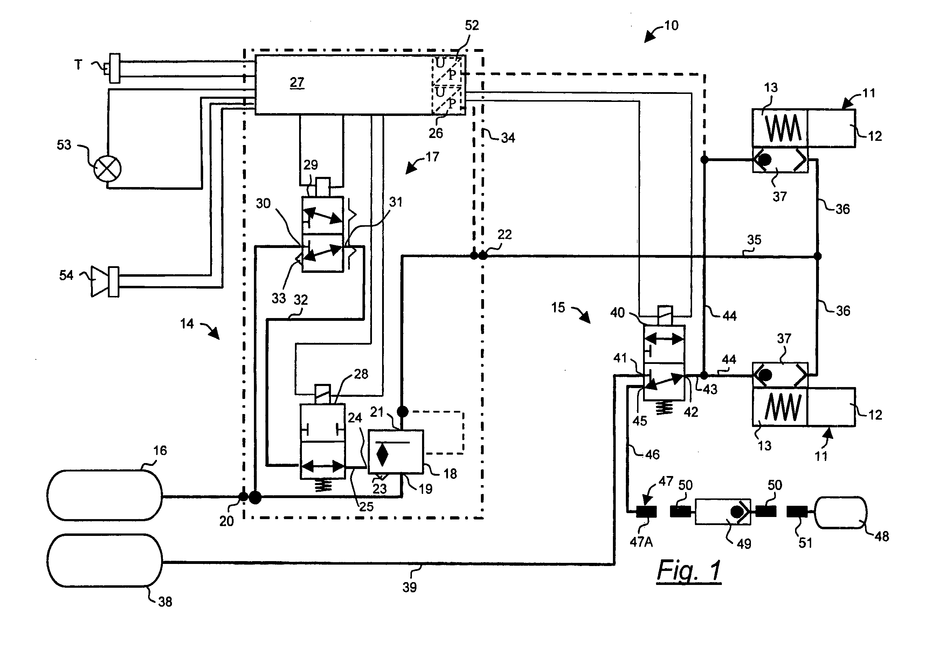

Fig. 1 zeigt in einer schematischen Darstellung eine Feststellbremseinrichtung 10 eines Kraftfahrzeuges, insbesondere eines Nutzfahrzeuges, vorzugsweise eines Busses.

Im dargestellten Ausführungsbeispiel umfasst die Feststellbremseinrichtung 10 zwei als kombinierte Federspeicher-/Membranbremszylinder ausgebildete Federspeicherbremszylinder 11. Derartige kombinierte Bremszylinder weisen neben der Funktion von Membranbremszylindern zusätzlich eine Federspeicherfunktion auf. Die Federspeicherbremszylinder 11 umfassen je einen Membranteil 12, welcher pneumatisch mit einer (nicht dargestellten) Betriebsbremsanlage verbunden und mit dem eigentlichen Bremsdruck beaufschlagbar ist. Ferner umfassen die Federspeicherbremszylinder 11 je einen Federspeicherteil 13, welcher pneumatisch von dem Membranteil 12 getrennt und über gesonderte Druckluftleitungen mit Druckluft beaufschlagbar ist.

Jeder Federspeicherteil 13 setzt eine Federspeicherfunktion um, indem bei Druckluftbeaufschlagung des Federspeicherteils 13 eine Speicherfeder vorgespannt und dabei eine Bremswirkung der Federspeicher verringert wird. Bei einer Entlüftung des Federspeicherteils 13 entspannt sich die Speicherfeder, so dass eine Bremswirkung im Rahmen der Federspeicherfunktion auf die mit dem jeweiligen Federspeicherbremszylinder 11 verbundene Bremse ausgeübt wird. Mittels der Federspeicherbremszylinder 11 ist eine Feststellbremsfunktion realisiert, die auch bei Fehlen von Druckluft eine Bremsung bzw. ein Feststellen des Fahrzeuges ermöglicht. Um die Feststellbremse zu lösen, müssen die Federspeicherteile 13 belüftet werden.

Derartige Federspeicherbremszylinder 11 finden sich vorzugsweise an wenigstens den Rädern einer Achse oder aber auch an mehreren Achsen des Fahrzeuges, welches sowohl ein Zugfahrzeug, als auch ein Anhängerfahrzeug sein kann.

Bei einem alternativen Ausführungsbeispiel (nicht dargestellt) ist jedoch nur ein einziger Federspeicherbremszylinder vorgesehen, der bspw. an einer Kardanwelle wirkt.

Die Feststellbremseinrichtung 10 umfasst einen ersten elektropneumatischen Feststellbremskreis 14 sowie eine zweiten elektropneumatischen Feststellbremskreis 15.

Der erste Feststellbremskreis 14 weist einen ersten Druckluftvorratsbehälter 16 sowie eine erste Steuerventileinrichtung 17 zum Be- bzw. Entlüften der Federspeicherbremszylinder 11 auf. Die Steuerventileinrichtung 17 weist eine luftmengenverstärkende Ventileinrichtung in Form eines Relaisventils 18 auf. Das Relaisventil 18 umfasst einen Einlass 19, der mit einem Anschluss 20 für den ersten Druckluftvorratsbehälter 16 verbunden ist. Das Relaisventil 18 weist ferner einen Auslass 21 auf, der mit einem weiteren Anschluss 22 für die Federspeicherbremszylinder verbunden ist. Ferner umfasst das Relaisventil 18 eine schematisch dargestellte Entlüftung 23, über die Druckluft entweichen kann. Vorzugsweise werden die Entlüftung 23 sowie weitere Entlüftungen weiterer Ventile mit einer gemeinsamen Entlüftungseinrichtung verbunden, über welche Druckluft zentral in die Atmosphäre entweichen kann.

Das Relaisventil 18 weist ferner einen Steuereingang 24 auf, über den ein Steuerdruck über eine Steuerleitung 25 dem Relaisventil 18 zugeführt werden kann. Das Relaisventil 18 steuert an seinem Auslass 21 genau diesen Steuerdruck aus, jedoch verstärkt das Relaisventil die Luftmenge. D.h. das am Auslass 21 des Relaisventils 18 bereitgestellte Volumen ist signifikant größer als das in der Steuerleitung 25 transportierte Volumen.

Der Druck am Auslass 21 des Relaisventils 18 und damit der Druck, der zu den Federspeichebremszylindern 11 geführt wird, wird mittels eines Drucksensors 26 gemessen. Dieser Drucksensor 26 liefert ein elektrisches Signal an eine elektrische bzw. elektronische Steuereinrichtung 27.

Der Steuerdruck am Steuereingang 24 des Relaisventils 18 wird über ein Haltenventil 28 sowie ein Bistabilventil 29 bestimmt, die ebenfalls der ersten Steuerventileinrichtung 17 zugeordnet sind. Das Haltenventil 28 ist zu diesem Zweck vor den Steuereingang 24 des Relaisventils 18 geschaltet, so dass die Steuerleitung 25 mittels dieses Haltenventils 28 abgesperrt bzw. geöffnet werden kann. Das Haltenventil 28 ist als elektrisch betätigbares 2/2-Wege-Magnetventil ausgebildet.

Das Bistabilventil 29 weist einen Einlass 30 auf, der mit dem Anschluss 20 für den ersten Druckluftvorratsbehälter 16 verbunden ist. Ferner weist das Bistabilventil 29 einen Auslass 31 auf, der über einen Druckmittelkanal 32 mit dem Haltenventil 28 in Verbindung steht. Schließlich weist das Bistabilventil 29 eine Entlüftung 33 auf, über die Druckluft entweichen kann.

Das Bistabilventil 29 ist mit einer bistabilen Schaltfunktion mit zwei Schaltzuständen ausgebildet. D.h. das Bistabilventil 29 behält seinen Zustand, selbst wenn es nicht mehr bestromt wird.

Im Gegensatz dazu handelt es sich bei dem Haltenventil 28 um ein federbelastetes Ventil, wobei dieses federbelastete Ventil in einem unbestromten Zustand den in Fig. 1 dargestellten ersten Schaltzustand einnimmt, d.h. durchschaltet und dabei die Steuerleitung 25 mit dem Druckmittelkanal 32 verbindet. Demgegenüber sperrt es in einem bestromten, zweiten Schaltzustand die Steuerleitung 25 gegen den Druckmittelkanal 32 ab, so dass der in der Steuerleitung 25 vorhandene Druck und somit der Druck am Steuereingang 24 und auch am Auslass 21 des Relaisventils 18 gehalten wird.

Das Bistabilventil 29 weist einen ersten Schaltzustand auf, in dem Druckluft vom Haltenventil 28 über die Entlüftung 33 abführbar ist. Dieser Schaltzustand ist in Fig. 1 dargestellt. In einem zweiten Schaltzustand des Bistabilventils 29 ist Druckluft vom ersten Druckluftvorratsbehälter 16 zum Haltenventil 28 zuführbar.

Im ersten Schaltzustand des Bistabilventils 29 ist daher der Auslass 31 mit der Entlüftung 33 verbunden, während der Auslass 31 gegen den Einlass 30 abgesperrt ist. Im zweiten Schaltzustand ist dagegen der Auslass 31 mit dem Einlass 30 verbunden, während der Auslass 31 gegen die Entlüftung 33 abgesperrt ist.

Die erste Steuerventileinrichtung 17 mit ihrem Relaisventil 18, dem Haltenventil 28 und dem Bistabilventil 29 sowie die Steuereinrichtung 27 sind in einem Feststellbremsmodul 34 angeordnet. Das Feststellbremsmodul 34 ist Teil einer pneumatischen Bremsanlage des Fahrzeugs.

Über den Anschluss 22 des Feststellbremsmoduls 34 wird der Auslass 21 des Relaisventils 18 über Druckluftleitungen 35, 36 über jeweils ein Wechselventil 37 den Federspeicherbremszylindern 11 und zwar jeweils dem Federspeicherteil 13 zugeführt. Die erste Steuerventileinrichtung 17 steht somit über Wechselventile 37 mit den Federspeicherbremszylindern 11 in Verbindung und bildet den ersten Feststellbremskreis 14, mittels dem die Feststellbremse eingelegt bzw. gelöst werden kann.

Für den Fall eines Versagens dieses ersten Feststellbremskreises 14 steht der zweite Feststellbremskreis 15 zur Verfügung, der ebenfalls mit den Wechselventilen 37 verbunden ist. Mittels dieses zweiten Feststellbremskreises 15 kann die Feststellbremse bei Ausfall des ersten Feststellbremskreises notgelöst werden, d.h. im Notlösefall können mittels des zweiten Feststellbremskreises 15 die Federspeicherteile 13 der Federspeicherbremszylinder 11 belüftet werden, um auf diese Weise die Feststellbremse zu lösen.

Der zweite Feststellbremskreis 15 weist einen zweiten Druckluftvorratsbehälter 38 auf, der über eine Druckluftleitung 39 mit einer zweiten Steuerventileinrichtung 40 verbunden ist, mittels der die Federspeicherbremszylinder 11 wenigstens belüftet und vorzugsweise sowohl belüftet als auch entlüftet werden können.

Die zweite Steuerventileinrichtung 40 ist vorzugsweise als federbelastetes elektrisch betätigbares 3/2-Wege-Magnetventil ausgebildet.

Dieses 3/2-Wege-Magnetventil 40 weist einen über die Druckluftleitung 39 mit dem zweiten Druckluftvorratsbehälter 38 verbundenen Einlass 41 auf. Ferner weist das 3/2-Wege-Magnetventil 40 einen Auslass 42 auf, der über Druckluftleitungen 43, 44 mit den Wechselventilen 37 verbunden ist. Schließlich weist das 3/2-Wege-Magnetventil einen Entlüftungsanschluss 45 auf, über den Druckluft in die Atmosphäre entweichen kann.

Der zweite Feststellbremskreis 15 ist für den Fall vorgesehen, dass der erste Feststellbremskreis 14 ausfällt. Bei einem Ausfall des ersten Feststellbremskreises 14, bspw. bei einem Bruch einer der Druckluftleitungen 35, 36, werden die Federspeicherteile 13 der Federspeicherbremszylinder 11 entlüftet und somit die Feststellbremse eingelegt. Das Fahrzeug kommt somit zum Stillstand bzw. wird festgestellt und kann nicht mehr bewegt werden. D.h. wegen des Defektes kann das Fahrzeug nicht mehr in die nächste Werkstatt abgeschleppt werden, da die Feststellbremse eingelegt bleibt. Um ein Lösen der Feststellbremse gleichwohl zu ermöglichen, ist der zweite Feststellbremskreis 15 vorgesehen, mittels dem die Federspeicherteile 13 der Federspeicherbremszylinder 11 belüftet werden können. Zu diesem Zweck wird das 3/2-Wege-Magnetventil 40 bestromt und somit in den in Fig. 1 nicht dargestellten Schaltzustand geschaltet. In diesem Schaltzustand ist der Einlass 41 des 3/2-Wege-Magnetventils 40 mit dem Auslass 42 dieses Ventils verbunden, so dass Druckluft von dem zweiten Druckluftvorratsbehälter 38 über die Druckluftleitungen 43, 44 und die Wechselventile 37 den Federspeicherteilen 13 der Federspeicherbremszylinder 11 zugeführt wird. Die Wechselventile 37 sind dabei derart ausgebildet, dass jeweils der an einem ihrer beiden, jeweils mit dem ersten bzw. dem zweiten Feststellbremskreis 14, 15 verbundenen Eingänge anliegende höhere Druck den Federspeicherteilen 13 zugeführt wird, während der jeweils andere Eingang mit dem niedrigeren Druck abgesperrt wird.

Ein Defekt im ersten Feststellbremskreis 14 wird mittels des Drucksensors 26 detektiert. Wenn der mittels des Drucksensors 26 gemessene Druck abfällt, obwohl eigentlich der Druck in der Leitung 35 bzw. 36 zu den Federspeicherbremszylindern in Folge einer Belüftung hoch sein sollte, oder aber dieser Druck nicht ansteigt, obwohl eine Belüftung stattfindet, erkennt die Steuereinrichtung 27, dass ein Leck in einer der Druckluftleitungen vorliegt, d.h. ein Rohrbruch aufgetreten ist, sofern nicht bereits ein anderer Fehler erkannt worden ist.

Wenn ein derartiges Leck detektiert bzw. ein Rohrbruch erkannt ist, werden die Federspeicherbremszylinder 11 mittels des zweiten Feststellbremskreises 15 belüftet, sofern dieser intakt ist.

Für den Fall, dass der zweite Feststellbremskreis 15 jedoch defekt ist, ist der Entlüftungsanschluss 45 des 3/2-Wege-Magnetventils 40 mit einer Druckluftleitung 46 verbunden, die an einem äußeren seitlichen Bereich des Fahrzeuges endet. D.h. ein entsprechendes offenes Ende 47 der Druckluftleitung 46 ist derart angebracht, dass es ohne weiteres von außerhalb des Fahrzeuges zugänglich ist. D.h. das Ende 47 ist derart am Fahrzeug angeordnet, dass, ohne das Fahrzeug aufbocken zu müssen, das Ende 47 von einer Person, bspw. dem Fahrer oder einem Mitarbeiter eines Abschleppunternehmens, bedient werden kann.

Dieses Ende 47 der Druckluftleitung 46 kann mit einer externen Druckluftquelle 48 verbunden werden, um Druckluft von dieser externen Druckluftquelle 48 über den Entlüftungsanschluss 45 und den Auslass 42 des 3/2-Wege-Magnetventils 40 den Federspeichebremszylindern 11 zuzuführen, um im Notlösefall die Feststellbremse zu lösen.

Das Ende 47 der Druckluftleitung 46 weist vorteilhafterweise eine Kupplung 47A zum Ankuppeln der externen Druckluftquelle 48 oder einer zu der externen Druckluftquelle 48 führenden weiteren Druckluftleitung auf.

Bei der externen Druckluftquelle 48 handelt es sich bspw. um einen externen Druckluftkompressor, der bspw. von einem Wartungsfahrzeug zur Verfügung gestellt wird. Es kann sich bei der externen Druckluftquelle 48 jedoch auch um einen Druckluftvorrat eines anderen Fahrzeuges, bspw. eines anderen Nutzfahrzeuges, handeln. Schließlich kann auch eine einfache Druckluftflasche als externe Druckluftquelle 48 verwendet werden, um Druckluft über die zweite Steuerventileinrichtung 40 den Federspeicherbremszylindern 11 im Notlösefall zuzuführen.

Vorzugsweise wird im Notlösefall zunächst an das Ende 47 der Druckluftleitung 46 ein Rückschlagventil 49 angekuppelt. Das Rückschlagventil 49 ist dabei derart ausgerichtet, dass zwar Druckluft von der externen Druckluftquelle 48 zur zweiten Steuerventileinrichtung 40 strömen kann, jedoch bei einem Lösen der externen Druckluftquelle 48 die den Federspeicherbremszylindern 11 zur Verfügung gestellte Druckluft nicht über das Ende 47 entweichen kann. Auf diese Weise kann über die externe Druckluftquelle 48 durch Zuführen von Druckluft in die Federspeicherbremszylinder die Feststellbremse gelöst und anschließend die externe Druckluftquelle 48 abgetrennt werden. Dies ist vorteilhaft, da auf diese Weise ohne großen Aufwand im Falle eines Defekts im ersten Feststellbremskreis 14 die Feststellbremse mittels des zweiten Feststellbremskreises auch dann gelöst werden kann, wenn mittels des zweiten Druckluftvorratsbehälters 38 keine Druckluft den Federspeicherbremszylindern 11 zugeführt werden kann. Dieser Fall tritt bspw. dann auf, wenn aufgrund eines Ausfalls der elektrischen Energieversorgung das 3/2-Wege-Magnetventil 40 nicht mehr geschaltet werden kann oder aber bspw. der den zweiten Druckluftvorratsbehälter 38 versorgende Kompressor ausgefallen ist.

Wird bspw. als externe Druckluftquelle 48 ein anderes Fahrzeug verwendet, um durch kurzzeitiges Bereitstellen von Druckluft die Federspeicherbremszylinder 11 zu belüften und damit die Feststellbremse zu lösen, kann nach dem Lösen der Feststellbremse dieses Fahrzeug wieder einen anderen Weg nehmen und trotzdem das zur Feststellbremseinrichtung 10 gehörende Fahrzeug bei gelöster Feststellbremse abgeschleppt werden.

Das Rückschlagventil 49 weist an seinen beiden Enden jeweils Kupplungsstücke 50 auf, die an das Ende 47 bzw. die Kupplung 47A der Druckluftleitung 46 bzw. an ein entsprechendes Kupplungsstück 51 der externen Druckluftquelle 48 angepasst sind.

Im Ausführungsbeispiel gemäß Fig. 1 ist der erste Feststellbremskreis - abgesehen von dem Druckluftvorratsbehälter 16 - im Feststellbremsmodul 34 integriert. Der zweite Feststellbremskreis 15 ist dabei jedoch extern, d.h. außerhalb des Feststellbremsmoduls 34 vorgesehen.

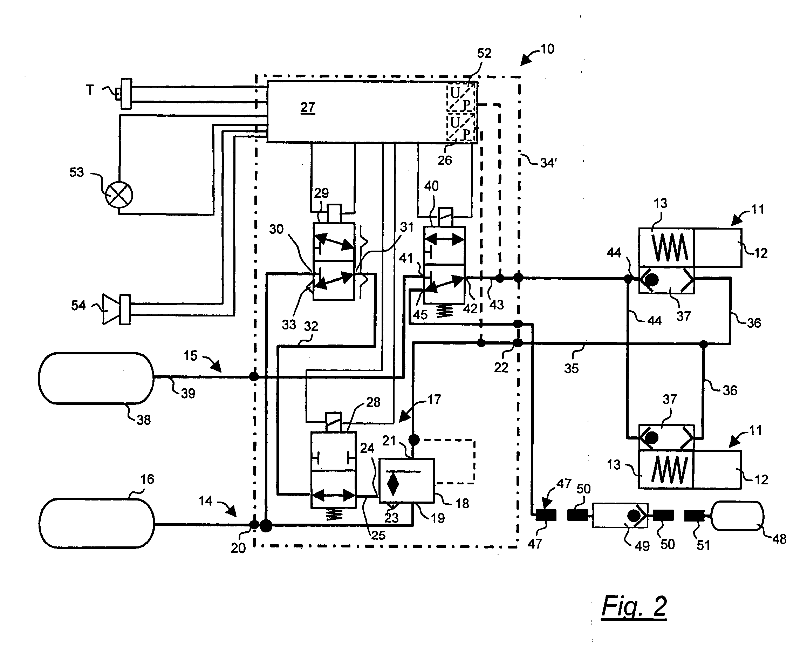

Im Ausführungsbeispiel gemäß Fig. 2 ist jedoch - ebenfalls abgesehen von den Druckluftvorratsbehältern 16 und 38 - auch der zweite Feststellbremskreis 15 in einem Feststellbremsmodul 34' integriert. Im Übrigen entspricht aber das Ausführungsbeispiel gemäß Fig. 2 dem in Fig. 1 gezeigten Ausführungsbeispiel, so dass auf die Ausführungen zu Fig. 1 verwiesen wird.

Da normalerweise die Leitungen des zweiten Feststellbremskreises drucklos und nicht hoch beansprucht sind, hat der zweite Feststellbremskreis 15 prinzipiell eine höhere Verfügbarkeit als der erste Feststellbremskreis 14. Jedoch wird der zweite Feststellbremskreis 15 nur extrem selten benötigt. Daher besteht die Gefahr, dass sich das 3/2-Magnetventil 40 festsetzt und somit im Notlösefall nicht mehr betätigt werden kann. Um dies zu vermeiden, wird das 3/2-Wege-Magnetventil 40 mittels der Steuereinrichtung 27 unabhängig von einem etwaigen Notlösefall immer wieder testweise betätigt, um dieses Ventil 40 gangbar zu halten. Entsprechendes gilt auch für die Wechselventile 37, die ebenfalls nur im Notlösefall zu betätigen sind. Auch bei diesen Wechselventilen 37 besteht die Gefahr eines Festsetzens, die durch regelmäßiges Betätigen signifikant reduziert wird.

Die Steuereinrichtung 27 ist derart ausgebildet, dass sie das 3/2-Wege-Magnetventil 40 automatisch zu vorbestimmten Zeitpunkten betätigt. Derartige Zeitpunkte können bspw. während einer Stillstandsphase des Fahrzeuges bei gleichzeitig betätigter Betriebsbremse festgelegt sein. Bei einer derartigen testweisen Betätigung des zweiten Feststellbremskreises 15 werden dabei zunächst über den ersten Feststellbremskreis 14 die Federspeicherteile 13 der Federspeicherbremszylinder 11 entlüftet, so dass die Feststellbremse eingelegt wird. Sodann erfolgt eine Belüftung der Federspeicherteile 13 mittels des zweiten Feststellbremskreises 15 über die vom zweiten Druckluftvorratsbehälter 38 zugeführte Druckluft. Damit das Fahrzeug in dieser Phase des Einlegens und Lösens der Feststellbremse nicht in kritische Fahrzustände gelangt, werden derartige Testzyklen nur dann durchgeführt, wenn das Fahrzeug stillsteht und zugleich die Betriebsbremse betätigt ist bzw. wird. Die Steuereinrichtung 27 steht daher mit der Betriebsbremse in Verbindung und kann die Betriebsbremse veranlassen, das Fahrzeug gebremst zu halten bzw. zu bremsen.

Vorteilhafterweise wird das 3/2-Wege-Magnetventil 40 unmittelbar nach dem Anlassen des Motors des Fahrzeuges und/oder unmittelbar vor dem Abstellen des Fahrzeuges betätigt. In beiden Fällen kann davon ausgegangen werden, dass das Fahrzeug stillsteht. Ein erforderlicher Testzyklus kann sehr schnell durchgeführt werden, so dass es zu keinen spürbaren Verzögerungen beim Starten des Fahrzeuges bzw. beim Abstellen des Fahrzeuges kommt.

Neben den beschriebenen automatisch durchgeführten Testzyklen, ist vorteilhafterweise ein mit der Steuereinrichtung 27 in Verbindung stehendes elektrisches Betätigungselement, bspw. ein Taster T oder ein Schalter, vorgesehen. Mittels dieses Betätigungselementes kann das 3/2-Wege-Magnetventil 40 manuell in Erwiderung auf eine Betätigung dieses Elements geschaltet werden. Der Fahrer oder ein Servicemitarbeiter kann somit einen Testzyklus für den zweiten Feststellbremskreis 15 auch manuell starten.

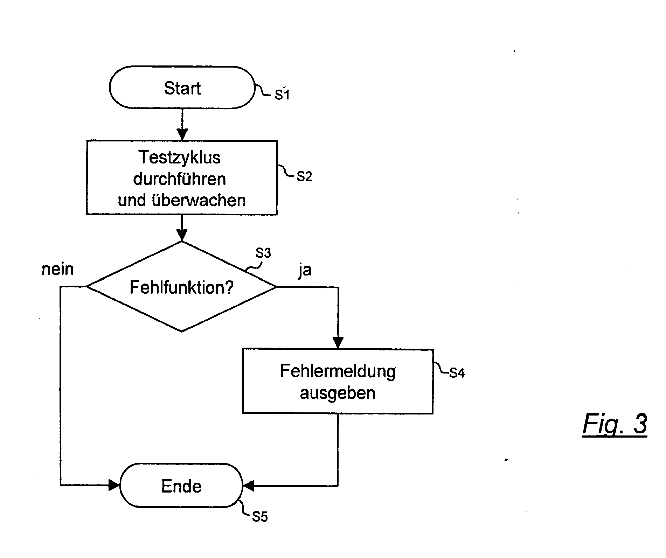

Fig. 3 zeigt ein schematisches Blockschaltbild zur Durchführung eines Verfahrens gemäß einem Ausführungsbeispiel der Erfindung. Im Schritt S1 wird ein Testzyklus gestartet, entweder, wie zuvor beschrieben, manuell mittels bspw. des Tasters T oder automatisch mittels der Steuereinrichtung 27. Im Schritt S2 wird der Testzyklus ausgeführt, indem das 3/2-Wege-Magnetventil 40 bestromt und damit geschaltet wird. Somit gelangt Druckluft vom zweiten Druckluftvorratsbehälter 38 über das 3/2-Wege-Magnetventil 40 und über die Druckluftleitungen 43, 44 sowie über die Wechselventile 37 zu den Federspeicherteilen 13 der Federspeicherbremszylinder, so dass die Feststellbremse gelöst wird. Während dieser gelösten Phase der Feststellbremse wird die Betriebsbremse eingelegt gehalten. Am Ende des Testzyklus wird die Bestromung des 3/2-Wege-Magnetventils 40 beendet, so dass das Ventil 40 wieder in den in den Fig. 1 bzw. 2 gezeigten federbelasteten Zustand wechselt, bei dem die Druckluftleitungen 43, 44 über die Druckluftleitung 46 entlüftet werden. Die Wechselventile 37 sperren dabei die Druckluftleitungen 44 ab und verhindern dabei eine Entlüftung der Federspeicherteile 13 der Federspeicherbremszylinder 11, wenn die Wechselventile 37 über den ersten Feststellbremskreis 14 belüftet werden, insbesondere wenn der Druck in den Druckluftleitungen 36 höher ist als in den Druckluftleitungen 44.

Ferner wird im Schritt S2 der Testzyklus überwacht, und zwar bspw. indem der Druck in den Druckluftleitungen 43, 44 bzw. am Auslass 42 des 3/2-Wege-Magnetvnetils 40 überwacht wird. Diese Drucküberwachung erfolgt mittels eines in den Fig. 1 und 2 dargestellten Drucksensors 52, der ein elektrisches Signal an die Steuereinrichtung 27 liefert. Sobald das 3/2-Wege-Magnetventil 40 bestromt wird, muss der Druck in den Leitungen 43, 44 ansteigen, wenn das 3/2-Wege-Magnetventil 40 gangbar ist und Druckluft im Druckluftvorratsbehälter 38 zur Verfügung steht. Hat sich jedoch das 3/2-Wege-Magnetventil 40 festgesetzt, d.h. ist es nicht mehr gangbar oder aber es steht kein Druck in dem zweiten Druckluftvorratsbehälter 38 zur Verfügung, steigt der Druck in den Druckluftleitungen 43, 44 nicht an. In diesem Fall kann im Schritt S3 eine Fehlfunktion im zweiten Feststellbremskreis 15 erkannt und im Schritt S4 eine Fehlermeldung ausgegeben werden.

Zusätzlich oder alternativ zu dem Drucksensor 52 ist bei einem weiteren Ausführungsbeispiel ein Druckschalter am Ausgang des 3/2-Wege-Magnetventils 40 bzw. an/in einer der Leitungen 43, 44 vorgesehen, der bei Über- bzw. Unterschreiten eines vorbestimmten Druckschwellenwertes einen elektrischen Strom schaltet. Dieser elektrische Strom gibt Aufschluss darüber, ob das 3/2-Wege-Magnetventil 40 betätigt worden ist, d.h. ob es gangbar ist. Schaltet der Druckschalter hingegen nicht, wird wiederum im Schritt S3 eine Fehlfunktion im zweiten Feststellbremskreis 15 erkannt und im Schritt S4 eine Fehlermeldung ausgegeben.

Bei einem weiteren Ausführungsbeispiel ist alternativ oder zusätzlich zum Drucksensor 52 bzw. zum Druckschalter eine Überwachung der elektrischen Größen Strom und/oder Spannung am 3/2-Wege-Magnetventil 40 vorgesehen. D.h. es wird der Strom zu dem 3/2-Wege-Magnetventil 40 und/oder die an diesem Ventil anliegende Spannung gemessen. Sowohl der Strom als auch die Spannung sind in der Steuereinrichtung 27 verfügbar und können somit ohne Verlegung weiterer elektrischer oder pneumatischer Leitungen zum 3/2-Wege-Magnetventil 40 bereits in der Steuereinrichtung 27 gemessen werden. Der konstruktive Aufwand ist daher bei einer derartigen Lösung sehr gering. Wenn das 3/2-Wege-Magnetventil 40 gangbar ist und daher planmäßig schaltet, führt dies durch Induktion im Magnetventil 40 zu messbaren Änderungen des Stroms bzw. der Spannung am Magnetventil 40 gegenüber dem Fall eines festsitzenden Magnetventils 40. In der Steuereinrichtung 27 wird daher der Strom- bzw. Spannungsverlauf am Magnetventil 40 überwacht. Entspricht er nicht einem vorbestimmten Verlauf, wird eine Fehlermeldung im Schritt S4 ausgegeben.

In allen genannten Ausführungsbeispielen wird die Fehlermeldung gemäß Schritt S4 entweder mittels eines optischen Anzeigemittels 53, bspw. einer Kontrollleuchte, und/oder mittels eines akustischen Anzeigemittels 54, bspw. eines Summers, ausgegeben. Im Schritt S5 wird dann der Testlauf und die Überprüfung der Notlösefunktion des zweiten Feststellbremskreises 15 beendet. Sofern jedoch im Schritt S3 keine Fehlfunktion im zweiten Feststellbremskreis 15 festgestellt worden ist, wird der Testlauf ohne Ausgabe einer Fehlermeldung im Schritt S5 beendet.

Dank der erfindungsgemäßen Lösung kann die Lösbarkeit einer Feststellbremse mit Notlösefunktion signifikant verbessert und damit insbesondere die Wahrscheinlichkeit reduziert werden, dass die Feststellbremse trotz Notlösefunktion bei einem Rohrbruch bzw. einem festgestellten Leck nicht mehr gelöst und somit das Fahrzeug nicht mehr abgeschleppt werden kann.

Alle in der vorstehenden Beschreibung und in den Ansprüchen genannten Merkmale sind auch einzeln mit der erfindungsgemäßen Feststellbremseinrichtung kombinierbar. Somit ist die Erfindung nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Feststellbremseinrichtung eines Fahrzeuges, insbesondere Nutzfahrzeuges, mit Notlösefunktion und wenigstens einem Federspeicherbremszylinder (11) zum Lösen oder Einlegen einer Feststellbremse, einem ersten elektropneumatischen Feststellbremskreis (14), der einen ersten Druckluftvorratsbehälter (16) und eine erste Steuerventileinrichtung (17) zum Beoder Entlüften des Federspeicherbremszylinders (11) aufweist, und einem zweiten elektropneumatischen Feststellbremskreis (15) zum Notlösen der Feststellbremse bei Ausfall des ersten Feststellbremskreises (14), der einen zweiten Druckluftvorratsbehälter (38) und eine zweite Steuerventileinrichtung (40) wenigstens zum Belüften des Federspeicherbremszylinders (11) im Notlösefall aufweist, wobei die zweite Steuerventileinrichtung (40) einen mit dem zweiten Druckluftvorratsbehälter (38) verbundenen Belüftungsanschluss (41), einen mit der Atmosphäre verbindbaren Entlüftungsanschluss (45) und einen mit dem Federspeicherbremszylinder (11) verbindbaren dritten Anschluss (42) aufweist, **dadurch gekennzeichnet, dass** der Entlüftungsanschluss (45) der zweiten Steuerventileinrichtung (40) mit einer Druckluftleitung (46) verbunden ist, die an einem äußeren Bereich des Fahrzeuges endet, und dass über diese Druckluftleitung (46) Druckluft von einer externen Druckluftquelle (48) über den Entlüftungsanschluss (45) und den dritten Anschluss (42) der zweiten Steuerventileinrichtung (40) dem Federspeicherbremszylinder (11) zuführbar ist.

2. Feststellbremseinrichtung nach Anspruch 1, **dadurch gekennzeichnet, dass** die Druckluftleitung (46) an ihrem am äußeren Bereich des Fahrzeuges angeordneten Ende (47) eine Kupplung (47A) zum Ankuppeln der Druckluftquelle (48) oder einer zu der Druckluftquelle (48) führenden weiteren Druckluftleitung aufweist.

3. Feststellbremseinrichtung nach Anspruch 1 oder 2, **dadurch gekennzeichnet, dass** die Druckluftleitung (46) an ihrem am äußeren Bereich des Fahrzeuges angeordneten Ende (47) eine Kupplung (47A) zum Ankuppeln eines Rückschlagventils aufweist.

4. Feststellbremseinrichtung eines Nutzfahrzeuges, mit Notlösefunktion und wenigstens einem Federspeicherbremszylinder (11) zum Lösen oder Einlegen einer Feststellbremse, einem ersten elektropneumatischen Feststellbremskreis (14), der einen ersten Druckluftvorratsbehälter (16) und eine erste Steuerventileinrichtung (17) zum Be- oder Entlüften des Federspeicherbremszylinders (11) aufweist, und einem zweiten elektropneumatischen Feststellbremskreis (15) zum Notlösen der Feststellbremse bei Ausfall des ersten Feststellbremskreises (14), der einen zweiten Druckluftvorratsbehälter (38) und eine zweite Steuerventileinrichtung (40) wenigstens zum Belüften des Federspeicherbremszylinders (11) im Notlösefall aufweist, wobei die zweite Steuerventileinrichtung (40) einen mit dem zweiten Druckluftvorratsbehälter (38) verbundenen Belüftungsanschluss (41), einen mit der Atmosphäre verbindbaren Entlüftungsanschluss (45) und einen mit dem Federspeicherbremszylinder (11) verbindbaren dritten Anschluss (42) aufweist, nach einem der Ansprüche 1 bis 3, dadurch qekennzeichnet, dass die Feststellbremseinrichtung (10) ferner eine elektrische oder elektronische Steuereinrichtung (27) zum Steuern wenigstens der zweiten Steuerventileinrichtung (40) aufweist, die derart ausgebildet ist, dass die zweite Steuerventileinrichtung (40) unabhängig vom Notlösefall testweise betätigbar ist, um den zweiten Feststellbremskreis (15) zu aktivieren.

5. Feststellbremseinrichtung nach Anspruch 4, **dadurch gekennzeichnet, dass** die zweite Steuerventileinrichtung (40) automatisch zu vorbestimmten Zeitpunkten betätigbar ist.

6. Feststellbremseinrichtung nach Anspruch 5, **dadurch gekennzeichnet, dass** die zweite Steuerventileinrichtung (40) während einer Stillstandsphase des Fahrzeuges bei betätigter Betriebsbremse betätigbar ist.

7. Feststellbremseinrichtung nach Anspruch 6, **dadurch gekennzeichnet, dass** die zweite Steuerventileinrichtung (40) unmittelbar nach dem Anlassen eines Motors des Fahrzeuges betätigbar ist.

8. Feststellbremseinrichtung nach Anspruch 6 oder 7, **dadurch gekennzeichnet, dass** die zweite Steuerventileinrichtung (40) unmittelbar vor einem Abstellen des Fahrzeuges betätigbar ist.

9. Feststellbremseinrichtung nach einem der Ansprüche 4 bis 8, **dadurch gekennzeichnet, dass** die Steuereinrichtung (27) mit einem elektrischen Betätigungselement (T), insbesondere einem Taster oder Schalter, verbunden ist, um die zweite Steuerventileinrichtung (40) manuell in Erwiderung auf eine Betätigung des Betätigungselements (T) zu betätigen.

10. Feststellbremseinrichtung nach einem der Ansprüche 4 bis 9, **dadurch gekennzeichnet, dass** die Steuereinrichtung (27) Mittel (52) zum Überwachen der Funktionsfähigkeit des zweiten Feststellbremskreises (15) und Fehleranzeigemittel (53; 54) aufweist, um bei festgestellter Fehlfunktion des zweiten Feststellbremskreises (15) eine Fehlermeldung auszugeben.

11. Verfahren zum Betreiben einer Feststellbremseinrichtung mit Notlösefunktion nach einem der Ansprüche 1 bis 10, wobei zum Notlösen der Feststellbremse bei Ausfall des ersten Feststellbremskreises (14) das am äußeren Bereich des Fahrzeuges endende Ende (47) der mit dem Entlüftungsanschluss (45) verbundenen Druckluftleitung (46) mit einer externen Druckluftquelle (48) verbunden und Druckluft von dieser Druckluftquelle (48) über den Entlüftungsanschluss (45) und den dritten Anschluss (42) der zweiten Steuerventileinrichtung (40) dem Federspeicherbremszylinder (11) zugeführt und somit die Feststellbremse notgelöst wird. .

12. Verfahren nach Anspruch 11, wobei an das Ende der Druckluftleitung (46) zunächst ein Rückschlagventil (49) angebracht und dann an das Rückschlagventil (49) die Druckluftquelle (48) oder die zur Druckluftquelle (48) führende weitere Druckluftleitung angeschlossen wird, wobei das Rückschlagventil (49) derart angebracht wird, dass zwar Druckluft von der externen Druckluftquelle (48) zur zweiten Steuerventileinrichtung (40), jedoch nicht umgekehrt strömen kann.

13. Verfahren nach Anspruch 11 oder 12, wobei die zweite Steuerventileinrichtung (40) von einer elektrischen oder elektronischen Steuereinrichtung (27) unabhängig vom Notlösefall testweise betätigt wird, um den zweiten Feststellbremskreis (15) zu aktivieren.

14. Verfahren nach Anspruch 13, wobei die zweite Steuerventileinrichtung (40) automatisch zu vorbestimmten Zeitpunkten betätigt wird.

15. Verfahren nach Anspruch 14, wobei die zweite Steuerventileinrichtung (40) während einer Stillstandsphase des Fahrzeuges bei betätigter Betriebsbremse betätigt wird.

16. Verfahren nach Anspruch 15, wobei die zweite Steuerventileinrichtung (40) unmittelbar nach dem Anlassen eines Motors des Fahrzeuges betätigt wird.

17. Verfahren nach Anspruch 15 oder 16, wobei die zweite Steuerventileinrichtung (40) unmittelbar nach dem Abstellen des Fahrzeuges betätigt wird.

18. Verfahren nach einem der Ansprüche 13 bis 17, wobei die zweite Steuerventileinrichtung (40) manuell betätigt wird.

19. Verfahren nach einem der Ansprüche 13 bis 18, wobei die Steuereinrichtung (27) das testweise Betätigen der zweiten Steuerventileinrichtung (40) überwacht (S2) und im Falle einer festgestellten Fehlfunktion (S3) des zweiten Feststellbremskreises (15) eine Fehlermeldung ausgibt (S4).

## Claims

1. Parking brake device for a vehicle, in particular a utility vehicle, with an emergency release function and with at least one spring brake cylinder (11) for releasing or engaging a parking brake, with a first electropneumatic parking brake circuit (14) which has a first compressed-air storage tank (16) and a first control valve device (17) for aerating or deaerating the spring brake cylinder (11), and with a second electropneumatic parking brake circuit (15) for the emergency release of the parking brake in the event of a failure of the first parking brake circuit (14), which second electropneumatic parking brake circuit (15) has a second compressed-air storage tank (38) and a second control valve device (40) at least for aerating the spring brake cylinder (11) in the event of an emergency release, with the second control valve device (40) having an aeration port (41) which is connected to the second compressed-air storage tank (38), a deaeration port (45) which can be connected to the atmosphere, and a third port (42) which can be connected to the spring brake cylinder (11), **characterized in that** the deaeration port (45) of the second control valve device (40) is connected to a compressed-air line (46) which ends at an outer region of the vehicle, and **in that** compressed air can be supplied via said compressed-air line (46) from an external compressed-air source (48) via the deaeration port (45) and via the third port (42) of the second control valve device (40) to the spring brake cylinder (11).

2. Parking brake device according to Claim 1, **characterized in that** the compressed-air line (46) has, at its end (47) arranged at the outer region of the vehicle, a coupling (47A) for coupling to the compressed-air source (48) or to a further compressed-air line which leads to the compressed-air source (48).

3. Parking brake device according to Claim 1 or 2, **characterized in that** the compressed-air line (46) has, at its end (47) arranged at the outer region of the vehicle, a coupling (47A) for coupling to a non-return valve.

4. Parking brake device for a utility vehicle, with an emergency release function and with at least one spring brake cylinder (11) for releasing or engaging a parking brake, with a first electropneumatic parking brake circuit (14) which has a first compressed-air storage tank (16) and a first control valve device (17) for aerating or deaerating the spring brake cylinder (11), and with a second electropneumatic parking brake circuit (15) for the emergency release of the parking brake in the event of a failure of the first parking brake circuit (14), which second electropneumatic parking brake circuit (15) has a second compressed-air storage tank (38) and a second control valve device (40) at least for aerating the spring brake cylinder (11) in the event of an emergency release, with the second control valve device (40) having an aeration port (41) which is connected to the second compressed-air storage tank (38), a deaeration port (45) which can be connected to the atmosphere, and a third port (42) which can be connected to the spring brake cylinder (11), according to one of Claims 1 to 3, **characterized in that** the parking brake device (10) also has an electric or electronic control device (27) for controlling at least the second control valve device (40), which control device (27) is designed such that the second control valve device (40) can be actuated in testwise fashion in order to activate the second parking brake circuit (15) independently of an emergency release situation.

5. Parking brake device according to Claim 4, **characterized in that** the second control valve device (40) can be actuated automatically at predetermined times.

6. Parking brake device according to Claim 5, **characterized in that** the second control valve device (40) can be actuated during a standstill phase of the vehicle when the service brake is actuated.

7. Parking brake device according to Claim 6, **characterized in that** the second control valve device (40) can be actuated directly after an engine of the vehicle is started.

8. Parking brake device according to Claim 6 or 7, **characterized in that** the second control valve device (40) can be actuated directly before the vehicle is shut down.

9. Parking brake device according to one of Claims 4 to 8, **characterized in that** the control device (27) is connected to an electric actuating element (T), in particular a push-button or switch, in order to actuate the second control valve device (40) manually in response to an actuation of the actuating element (T).

10. Parking brake device according to one of Claims 4 to 9, **characterized in that** the control device (27) has means (52) for monitoring the functionality of the second parking brake circuit (15) and fault display means (53; 54) in order to output a fault message in the event of a malfunction of the second parking brake circuit (15) being detected.

11. Method for operating a parking brake device with an emergency release function according to one of Claims 1 to 10, wherein for the emergency release of the parking brake in the event of a failure of the first parking brake circuit (14), the end (47), which ends at the outer region of the vehicle, of the compressed-air line (46) which is connected to the deaeration port (45) is connected to an external compressed-air source (48) and compressed air from said compressed-air source (48) is supplied via the deaeration port (45) and via the third port (42) of the second control valve device (40) to the spring brake cylinder (11), and an emergency release of the parking brake is effected.

12. Method according to Claim 11, with a non-return valve (49) firstly being attached to the end of the compressed-air line (46) and then the compressed-air source (48) or the further compressed-air line which leads to the compressed-air source (48) being connected to the non-return valve (49), with the non-return valve (49) being attached in such a way that compressed air can duly flow from the external compressed-air source (48) to the second control valve device (40), but not in the opposite direction.

13. Method according to Claim 11 or 12, with the second control valve device (40) being actuated in testwise fashion in order to activate the second parking brake circuit (15) independently of an emergency release situation.

14. Method according to Claim 13, with the second control valve device (40) being actuated automatically at predetermined times.

15. Method according to Claim 14, with the second control valve device (40) being actuated during a standstill phase of the vehicle when the service brake is actuated.

16. Method according to Claim 15, with the second control valve device (40) being actuated directly after an engine of the vehicle is started.

17. Method according to Claim 15 or 16, with the second control valve device (40) being actuated directly after the vehicle is shut down.

18. Method according to one of Claims 13 to 17, with the second control valve device (40) being actuated manually.

19. Method according to one of Claims 13 to 18, with the control device (27) monitoring (S2) the testwise actuation of the second control valve device (40) and outputting a fault message if a malfunction (S3) of the second parking brake circuit (15) is detected.

## Revendications

1. Dispositif de freinage de stationnement d'un véhicule, en particulier d'un véhicule utilitaire, comprenant une fonction de relâchement d'urgence et au moins un cylindre de frein à ressort accumulateur (11) pour relâcher ou enclencher un frein de stationnement, un premier circuit de freinage de stationnement électropneumatique (14) qui présente un premier réservoir d'air comprimé (16) et un premier dispositif de soupape de commande (17) pour ventiler ou désaérer le cylindre de frein à ressort accumulateur (11), et un deuxième circuit de freinage de stationnement électropneumatique (15) pour le relâchement d'urgence du frein de stationnement en cas de panne du premier circuit de freinage de stationnement (14), qui présente un deuxième réservoir d'air comprimé (38) et un deuxième dispositif de soupape de commande (40) au moins pour ventiler le cylindre de frein à ressort accumulateur (11) en cas de relâchement d'urgence, le deuxième dispositif de soupape de commande (40) présentant un raccordement de ventilation (41) connecté au deuxième réservoir d'air comprimé (38), un raccordement de désaérage (45) pouvant être connecté à l'atmosphère et un troisième raccordement (42) pouvant être connecté au cylindre de frein à ressort accumulateur (11), **caractérisé en ce que** le raccordement de désaérage (45) du deuxième dispositif de soupape de commande (40) est connecté à une conduite d'air comprimé (46) qui se termine au niveau d'une région extérieure du véhicule, et **en ce que** de l'air comprimé peut être acheminé par le biais de cette conduite d'air comprimé (46) depuis une source d'air comprimé externe (48) par le biais du raccordement de désaérage (45) et du troisième raccordement (42) du deuxième dispositif de soupape de commande (40) au cylindre de frein à ressort accumulateur (11).

2. Dispositif de freinage de stationnement selon la revendication 1, **caractérisé en ce que** la conduite d'air comprimé (46) présente, à son extrémité (47) disposée au niveau de la région extérieure du véhicule, un accouplement (47A) pour l'accouplement de la source d'air comprimé (48) ou d'une autre conduite d'air comprimé conduisant à la source d'air comprimé (48).

3. Dispositif de freinage de stationnement selon la revendication 1 ou 2, **caractérisé en ce que** la conduite d'air comprimé (46) présente, à son extrémité (47) disposée au niveau de la région extérieure du véhicule, un accouplement (47A) pour l'accouplement d'un clapet anti-retour.

4. Dispositif de freinage de stationnement d'un véhicule utilitaire, comprenant une fonction de relâchement d'urgence et au moins un cylindre de frein à ressort accumulateur (11) pour relâcher ou enclencher un frein de stationnement, un premier circuit de freinage de stationnement électropneumatique (14) qui présente un premier réservoir d'air comprimé (16) et un premier dispositif de soupape de commande (17) pour ventiler ou désaérer le cylindre de frein à ressort accumulateur (11), et un deuxième circuit de freinage de stationnement électropneumatique (15) pour le relâchement d'urgence du frein de stationnement en cas de panne du premier circuit de freinage de stationnement (14), qui présente un deuxième réservoir d'air comprimé (38) et un deuxième dispositif de soupape de commande (40) au moins pour ventiler le cylindre de frein à ressort accumulateur (11) en cas de relâchement d'urgence, le deuxième dispositif de soupape de commande (40) présentant un raccordement de ventilation (41) connecté au deuxième réservoir d'air comprimé (38), un raccordement de désaérage (45) pouvant être connecté à l'atmosphère et un troisième raccordement (42) pouvant être connecté au cylindre de frein à ressort accumulateur (11), selon l'une quelconque des revendications 1 à 3, **caractérisé en ce que** le dispositif de frein de stationnement (10) présente en outre un dispositif de commande électrique ou électronique (27) pour commander au moins le deuxième dispositif de soupape de commande (40), lequel est réalisé de telle sorte que le deuxième dispositif de soupape de commande (40) puisse être actionné à titre d'essai indépendamment d'un cas de relâchement d'urgence, afin d'activer le deuxième circuit de frein de stationnement (15).

5. Dispositif de frein de stationnement selon la revendication 4, **caractérisé en ce que** le deuxième dispositif de soupape de commande (40) peut être actionné automatiquement à des instants prédéterminés.

6. Dispositif de frein de stationnement selon la revendication 5, **caractérisé en ce que** le deuxième dispositif de soupape de commande (40) peut être actionné pendant une phase d'arrêt du véhicule lorsque le frein de service est actionné.

7. Dispositif de frein d'espacement selon la revendication 6, **caractérisé en ce que** le deuxième dispositif de soupape de commande (40) peut être actionné immédiatement après le démarrage d'un moteur du véhicule.

8. Dispositif de frein de stationnement selon la revendication 6 ou 7, **caractérisé en ce que** le deuxième dispositif de soupape de commande (40) peut être actionné immédiatement avant un arrêt du véhicule.

9. Dispositif de frein de stationnement selon l'une quelconque des revendications 4 à 8, **caractérisé en ce que** le dispositif de commande (27) est connecté à un élément d'actionnement électrique (T), en particulier une touche ou un commutateur, afin d'actionner le deuxième dispositif de soupape de commande (40) manuellement en réponse à un actionnement de l'élément d'actionnement (T).

10. Dispositif de frein de stationnement selon l'une quelconque des revendications 4 à 9, **caractérisé en ce que** le dispositif de commande (27) présente des moyens (52) pour contrôler la fonctionnalité du deuxième circuit de freinage de stationnement (15) et des moyens d'indication d'erreur (53 ; 54), afin d'émettre un signal d'erreur en cas de fonction d'erreur constatée du deuxième circuit de freinage de stationnement (15).

11. Procédé pour faire fonctionner un dispositif de frein de stationnement à fonction de relâchement d'urgence selon l'une quelconque des revendications 1 à 10, dans lequel, pour le relâchement d'urgence du frein de stationnement en cas de panne du premier circuit de freinage de stationnement (14), l'extrémité (47), se terminant au niveau de la région extérieure du véhicule, de la conduite d'air comprimé (46) connectée au raccordement de désaérage (45) est connectée à une source d'air comprimé externe (48) et l'air comprimé provenant de cette source d'air comprimé (48) est acheminé par le biais du raccordement de désaérage (45) et du troisième raccordement (42) du deuxième dispositif de soupape de commande (40) au cylindre de frein à ressort accumulateur (11) et ainsi le frein de stationnement est relâché d'urgence.

12. Procédé selon la revendication 11, dans lequel, à l'extrémité de la conduite d'air comprimé (46), est tout d'abord monté un clapet anti-retour (49) et ensuite la source d'air comprimé (48) ou la conduite d'air comprimé supplémentaire conduisant à la source d'air comprimé (48) est raccordée au clapet anti-retour (49), le clapet anti-retour (49) étant monté de telle sorte que certes de l'air comprimé puisse s'écouler depuis la source d'air comprimé externe (48) vers le deuxième dispositif de soupape de commande (40), mais pas dans le sens inverse.

13. Procédé selon la revendication 11 ou 12, dans lequel le deuxième dispositif de soupape de commande (40) est actionné à titre d'essai indépendamment d'un cas de relâchement d'urgence par un dispositif de commande électrique ou électronique (27), afin d'activer le deuxième circuit de frein de stationnement (15).

14. Procédé selon la revendication 13, dans lequel le deuxième dispositif de commande de soupape (40) est actionné automatiquement à des instants prédéterminés.

15. Procédé selon la revendication 14, dans lequel le deuxième dispositif de soupape de commande (40) est actionné pendant une phase d'arrêt du véhicule lorsque le frein de service est actionné.

16. Procédé selon la revendication 15, dans lequel le deuxième dispositif de soupape de commande (40) est actionné immédiatement après le démarrage d'un moteur du véhicule.

17. Procédé selon la revendication 15 ou 16, dans lequel le deuxième dispositif de soupape de commande (40) est actionné immédiatement après l'arrêt du véhicule.

18. Procédé selon l'une quelconque des revendications 13 à 17, dans lequel le deuxième dispositif de soupape de commande (40) est actionné manuellement.

19. Procédé selon l'une quelconque des revendications 13 à 18, dans lequel le dispositif de commande (27) contrôle (S2) l'actionnement à titre d'essai du deuxième dispositif de soupape de commande (40) et, dans le cas d'une fonction d'erreur constatée (S3) du deuxième circuit de freinage de stationnement (15), émet un signal d'erreur (S4).
